# EUROPEAN PATENT SPECIFICATION

(11) **EP 0 693 015 B1**
(45) Date of publication and mention of the grant of the patent: **07.01.1998**
(21) Application number: 94909257.1
(22) Date of filing: 18.03.1994
(51) Int. Cl.: B23C 3/35

(54) **A KEY MILL**
SCHLÜSSELFRÄSMASCHINE
MACHINE A FABRIQUER DES CLES

(30) Priority: 19.03.1993 GB 9305736
(43) Date of publication of application: 24.01.1996
(73) Proprietor: Autokey (UK) Ltd., Whyteleafe, Surrey CR3 0BL (GB)
(72) Inventor: Clement, David Alan, Whyteleafe, Surrey CR3 0BL (GB); McMurray, Alan, Westoning, Beds. MK45 52E (GB)
(74) Representative: Adams, William Gordon
(86) International application number: GB9400553
(87) International publication number: WO9421410

(56) References cited:
- EP-A- 0 242 122
- CH-A- 673 612
- US-A- 4 256 423
- US-A- 4 592 683
- US-A- 5 054 350

## Description

The present invention relates to a key according to the precharacterising portion of claim 1 mill for cutting keys from blanks particularly for duplicating from an existing key or from a manufacturers specification.

Key mills for duplicating keys from blanks are well known. One such mill is shown and described in US Patent No. 4,117,763 (Uyeda). In the Uyeda mill a key blank is clamped into a carriage which can be moved in the axial direction of the blank and transverse to that direction towards a cutting or grinding wheel rotating in the axial direction so that spaced notches may be cut in the blank. In order to ensure the notches are in the correct place a master key or key to be duplicated is clamped into the same carriage and a follower engaging with the master is used to guide the operator to move the carriage in the axial and transverse directions. To ensure accuracy when copying from the key to be duplicated the axial and transverse movements of the carriage are indicated by two dial pointers which sweep over a table on which one of several indexing cards is located. The indexing card has indications for the axial movement or notch spacing and the transverse movement or notch depth. This arrangement is quite satisfactory for flat keys but is unsuitable for keys in which the notches are only partly cut through the blank that is to say where a vertical cut is required.

CH-A-673612 shows a key mill as set out in the preamble of claim 1, this mill has a frame, a single carriage with a single clamp for holding a master key or a blank key. The clamp can only be moved in the Y axis direction. A vertical milling tool is mounted in a milling head for movement in the vertical Z direction and the milling head is mounted on slide shafts on the frame for movement in the X direction. A follower is provided to follow the shape of a master key in the clamp and this shape is recorded in a computer. This arrangement has several disadvantages. Firstly, any wear between the slide shafts and the milling head is amplified by the distance to the cutting point of the milling tool to cause an error. Secondly, where there is wear between the shafts and head, this is transmitted as erroneous data to the computer, when re transmitted to control the movement of the milling tool which is again subject to wear, any error due to wear may be doubled. Thirdly, by limiting the movement of the carriage to only the Y axis and by only providing an end milling tool that is moving the tool in a Z direction towards the plane of the key, only one type of key can be cut. The arrangement limits the possibility to add on additional carriages for processing other key types.

US-A-4,592,683 shows a simple key mill only suitable for duplicating keys of the type where notches are out on the edge and where the key blank carriage is movable in the X direction. This clamp is fixed when cutting in the Y direction so that cutting from original data held on the mill is not possible.

US-A-5,054,350 is similar to US-A-4,117,763 but only permits cutting a blank from original data to produce a key of the type where notches are on the edge.

A key mill according to the invention comprises a frame, a first carriage including at least one clamp for clamping at least a key blank to the carriage, means to move the carriage relative to the frame in an axial direction, a milling head arranged to carry a milling tool and to move the tool in a further direction at substantially a right angle to the axial direction and at an angle to the transverse direction, indicator means for indicating the axial and transverse movement of the carriage and further indicator means for indicating movement of the milling tool in the further direction characterised in that the milling head is fixed without adjustment to the frame at a first station, means are provided to move at least the first carriage in a transverse direction transverse to the axial direction towards a key notch forming means mounted to the frame, indicator means for indicating the transverse movement of the carriage and in that at least the first carriage is pivotally mounted about an axis on a shaft in the axial direction to provide the transverse movement.

Thus the machine of the invention is adaptable for all forms of cutting whether from master keys or original data even where key blanks need rotation whilst maintaining the highest degree of accuracy. The simplicity of the axial mounting of the carriage or carriages secures a very economic solution to the problem of providing a multi-purpose machine.

Preferably the carriage has a first said clamp at the first station and a second said clamp at a second station adjacent the first station. In a preferred embodiment there is a duplicate clamp at the or each station and means for following the shape of a key at each duplicate clamp.

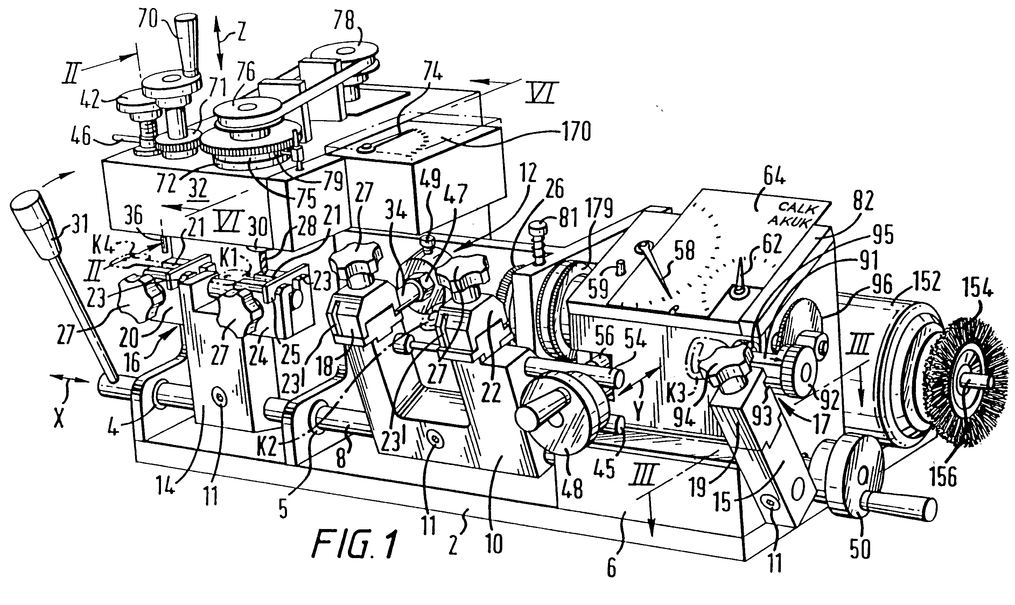

An embodiment of the invention will now be described with reference to the accompanying drawings in which:-
Figure 1 is a perspective view of a key mill according to the invention,
Figure 2 is a cross-section of a vertical milling head follower for the mill of Figure 1, and
Figure 3 is a cross-section of a right hand card holder indexed needle mechanism for the mill of Figure 1 viewed from above,
Figure 4 is a cross section of part of the mechanism of Fig. 3 looking horizontally from the left of Fig. 1,
Figure 5 is a cross section of the mechanism of Fig. 3 seen from the right of Fig. 1,

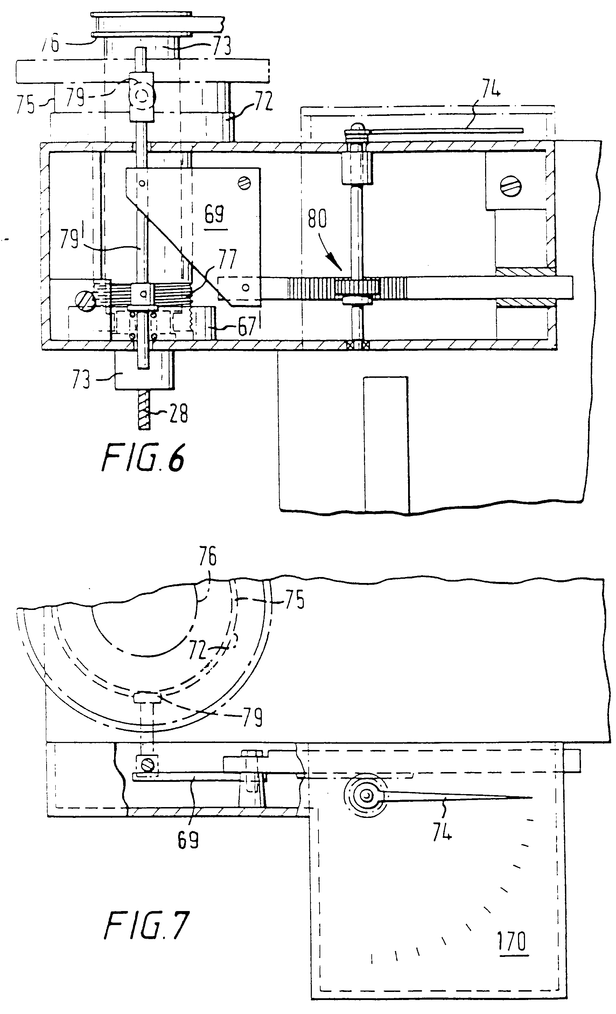

Figure 6 is a cross section of a left hand card holder seen from the right of Fig. 1,
Figure 7 is a plan view of the left hand holder of Fig. 6,
Figure 8 is a key type for horizontal milling,
Figure 9 is a key type for vertical milling in the mill of Figure 1, and
Figure 10 is a diagrammatic plan view of the mill of Figure 1.

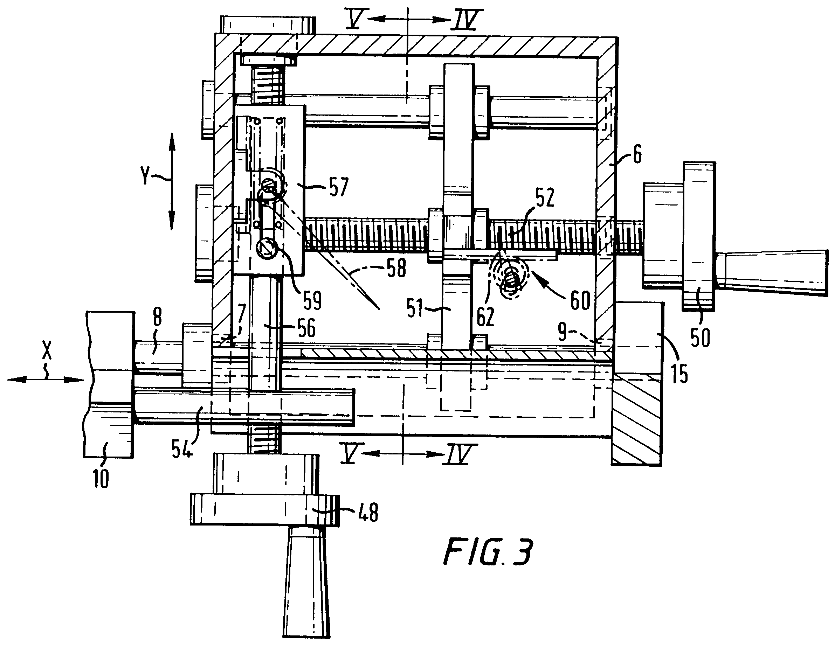

The key mill shown in the drawings comprises a frame 2 on which is mounted by means of bearings 4, 5 and two further bearings 7 and 9 (see Fig. 3) in frame part 6 a mainshaft 8 axially aligned in the X direction. A first carriage 14 at a first or vertical milling station 16 is fixedly mounted on the shaft, a second carriage 10 at a second or horizontal milling station 12 is fixedly mounted at an axially spaced central position on the shaft and a third carriage 15 is at a third or auxiliary horizontal milling station 17.

A first key duplicate clamp 20 and a second key duplicate clamp 18 are provided on the top of respective carriages 14 and 10. A first key blank clamp 24 and a second key blank clamp 22 are also provided on the top of respective carriages 14 and 10 in locations axially spaced from duplicate clamps 18 and 20. A third key blank clamp 19 is provided on top of third carriage 15. Clamp 19 is removably and reversibly mounted on carriage 15 and includes a key holder 91 which is slidably adjustable in the X direction on slide way 93 and which is clamped in the desired position by clamp knob 94. A blank key K3 in holder 91 may also be turned about a horizontal axis by indexed wheel 92, the key blank K3 being held in a key engaging rotatable bearing 95 within holder 91.

A slot 21 aligned in the X direction on top of each clamp 20, 24 is provided to receive a key K4 to be duplicated and a key blank K1 respectively. Each slot 21 has a transverse slot 23 in the Y direction into which a removable locating gate 25 is fitted. Pivotal movement of shaft 8 either by means of a handle 31 on shaft 8 or by transverse feed handle 48 causes all the carriages to move transversely towards a first horizontal milling cutter 26 a second horizontal milling cutter 96, and vertical milling tool 28. Shaft 8 is enabled to move in its bearings in its axial direction X so as to move the carriages axially by means of an axial feed handle 50 which turns feed screw 52 (see Fig. 3) to move plate 51 coupled to shaft 8.

A milling head 30 is mounted to bracket 32 for vertical movement so that the milling tool 28 can move in a direction towards a key blank K1 in clamp 24 in a direction Z at right angles to the axial direction X of shaft 8 and substantially at right angles to the median transverse tangential direction of movement Y of the carriages.

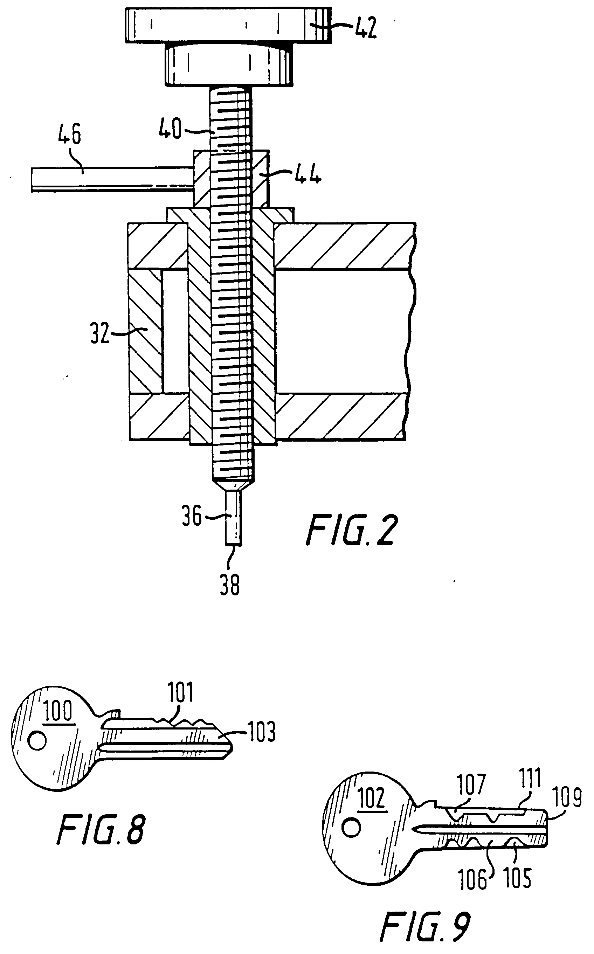

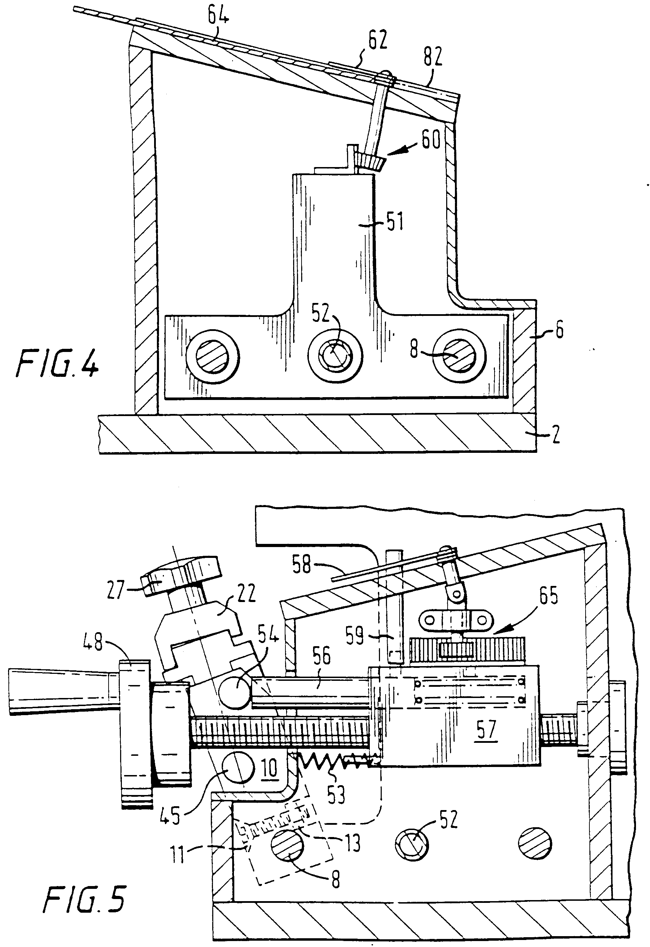

Means for following the shape of a master or duplicate key K4 clamped in clamps 18 and 20 are respectively followers 34 and 36. Vertical follower 36 shown in Figure 2 is similar to horizontally mounted transverse follower 34 and comprises a follower tip 38 indexed toward the master key K4 (clamped in clamp 20) by a screw threaded shaft 40. Handle 42 is provided to raise the tip 38 from the master key to a disengaged position. Shaft 40 is locked by a lock nut 44 rotatable by handle 46. Similarly nut 47 is provided to move the follower 34 transversely towards or away from a master key (not shown) clamped in clamp 18. The follower 34 is indexed toward the master key by means of a thread on the follower shaft (not shown) and is locked by screw 49. Clamps 18, 20, 22 and 24 can be rotated through 180° by slackening lock knobs 27 to clamp different shaped master keys and key blanks. Each carriage 10, 14 and 15 is locked to shaft 8 by a clamping screw 11 and nut 13 (shown in Fig. 5) so that the carriages can be adjusted relative to each other and to the respective cutters and card index needles.

In order to move the clamps on carriages 10, 14 and 15 transversely when using an index card to guide the carriages, the transverse feed handle 48 acts on the shaft 45 which is fixed to carriage 10 which in turn is fixed to shaft 8 to which carriage 14 is fixed. A spring 53 (see Fig. 5) is provided to urge the carriages back onto handle 48. The transverse movement of the clamps is in reality a pivotal movement about the axis of shaft 8, however the radial distance from the clamping position to the axis of the shaft 8 is sufficiently great as not to make any significant cutting error when milling transversely or axially. Indication of the depth of cut in the transverse direction Y is by means of a rod 54 aligned in the X direction and fixed at one end to carriage 10. Rod 54 abuts at its other end on a sprung rod 56 aligned and movable in the Y direction in block 57. Rod 56 acts through gearing 65 on indicator dial needle 58. Rod 56 can be disengaged from rod 54 by means of a stop 59 which can be engaged in rod 56 when rod 56 is at the rear end of its stroke away from handle 48. This enables the shaft 8 to be pivoted freely against spring 53 to move the carriages in the Y direction by means of handle 31 on shaft 8. Control by handle 31 enables the cutting action either by tool 28 or tool 26 to be controlled by pressing a master key in clamp 20 or clamp 18 onto followers 36 or 34 respectively. Correct axial location of the master key relative the key blank is achieved by locating the master and blank against gates 25 when milling vertically.

Axial movement of the carriage is by means of axial feed handle 50 turning feed screw 52. The axial movement is transmitted through rack and pinion gearing 60 to dial needle 62. A card 64 has the necessary indications for depth and spacing positions and is removably held in card holder 82.

Vertical movement of milling tool 28 mounted on shaft 73 carried in bearings 67 is controlled by rotation of indexing handle 70 which rotates through a cog wheel 71 an externally toothed cylindrical housing 72 threaded at 77. Vertical movement is indicated by index needle 74 which swings over a dial marked on an index card 170. Tool 28 is driven by pulley 76 in turn driven by a first motor 150 which drives drive pulley 78. Housing 72 is grooved at 75 round its lower part which is engaged by roller pawl 79. Pawl 79 moves up and down with pawl shaft 79' as housing 72 is raised and lowered by rotating in threaded bearing 77'. Pawl shaft 79' then transmits this movement to needle 74 via crank plate 69 and rack and pinion drive 80.

Tool 26 in the horizontal milling section is driven through pulleys 179 and 180 by a second motor 152. A spring detent 81 locks the shaft (not shown) on which cutter tool 26 is mounted so as to enable cutter 26 to be removed from a threaded end of that shaft. A wire brush 154 is mounted on the drive shaft 156 of motor 152.

### Operation

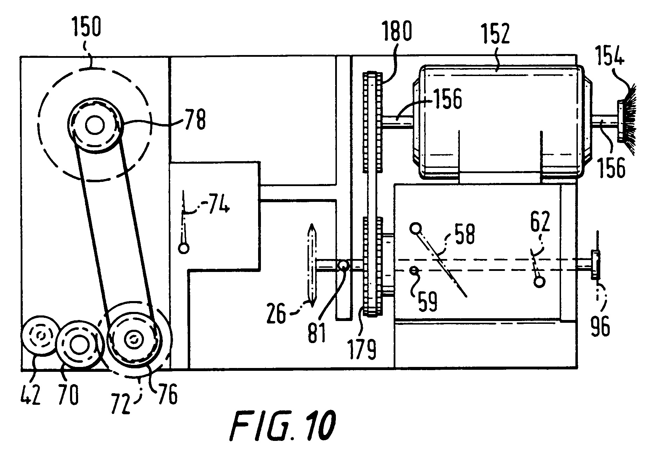

Depending on the type of key to be cut the appropriate key blank K2, K1 is clamped in clamp 22 or 24 to cut a first key type 100 shown in Fig. 8 which has notches 101 right through the blade 103 or respectively second key type 102 shown in Fig. 9 which has recesses 105 cut perhaps only a third through the thickness of the blade 106 leaving uncut portions 107. That is the first key type blank is fitted into clamp 22 and the second key type blank is fitted into clamp 24 with its tip 109 abutting on gate 25 fitted into slot 23. After clamp knob 27 is tightened gate 25 is removed to allow the tool 28 free passage along the length of the clamp.

In a first cutting method where a master key is not used the vertical depth to be cut in the Z direction by tool 28 is set by aligning needle 74 on an indication on index card 170 by means of handle 70 from the key manufacturers specification. The specification also specifies a particular range of spacing of recesses 107 in the axial or X direction and a range of depths from edge 111 of key 102 in the Y direction. These are indicated on index card 64 which is fitted to card holder 82. Each key has specific X direction locations and Y direction depths taken from a table. The vertical mill motor 150 is switched on. A first cut is made by the tool 28 at the set Z direction depth and at an axial or X direction location set by handle 50 by means of needle 62 against an indication on card 64 and for a Y direction depth from the equivalent of edge 111 on a blank as read off on an indication on card 64 as indicated by needle 58. The individual Z and Y direction settings are obtained from a manufacturers specification for each key. Subsequent cuts are made in the same way.

In a second cutting method for keys of type 102, the master key K4 which may be a duplicate of the master key is clamped into clamp 20 using gate 25 to locate the master in the correct axial or X direction and then removing the gate. A blank K1 is similarly clamped in clamp 24 using gate 25. Handle 48 is disengaged by locking rod in its near position by stop 59 and the recesses 107 followed by follower 36 under pressure from handle 31 and by axial movement in the X direction by turning handle 50.

In a third cutting method where a duplicate of key 100 is to be made without using a master key a blank K2 is clamped in clamp 22 by handle 27. The appropriate index card 64 is fitted into card holder 82. The motor 152 is switched on and cuts made in the blank K2 according to the particular key specification by cutter 26 adjusting handles 48 and 50 as necessary.

In a fourth cutting method where a master key of the 100 type is present, the master key is clamped in clamp 18 and a blank in clamp 22. Follower 34 is adjusted and handles 31 and 50 manipulated with the motor 152 switched on so that the shape of the master key notches 101 is copied onto the blank.

In a fifth cutting method a key blank K3 is inserted into bearing 95 in holder 91 and the third method is followed. Where necessary the blank K3 is turned about its horizontal axis by indexed wheel 92.

It will be appreciated that the carriages 10, 14 and 15 although separate are effectively a single carriage being coupled by shaft 8 and indeed could in theory be a single component; however, five clamps would still be needed for the embodiment described. Whilst two motors are provided a single motor could drive both cutters; however, it is cheaper to provided two motors avoiding thereby the cost of gearing required for a single motor.

## Claims

1. A key mill comprising a frame (2), a first carriage (14) including at least one clamp (20,24)for clamping at least a key blank (K1) to the carriage, means (50) to move the carriage relative to the frame in an axial direction (X), a milling head (30) arranged to carry a milling tool (28) and to move the tool in a further direction (Z) at substantially a right angle to the axial direction, indicator means (62) for indicating the axial movement of the carriage and further indicator means (74) for indicating movement of the milling tool in the further direction characterised in that the milling head is fixed without adjustment to the frame at a first station (16), means (48) are provided to move at least the first carriage in a transverse direction (Y) transverse to the axial direction towards a key notch forming means (26) mounted to the frame, indicator means (58) for indicating the transverse movement of the carriage and in that at least the first carriage is pivotally mounted about an axis on a shaft (8) in the axial direction to provide the transverse movement.

2. A key mill according to claim 1 wherein the carriage has a first said clamp (24) at the first station and a second said clamp (22) at a second station (12) adjacent the first station.

3. A key mill according to claim 1 or 2 wherein there is a duplicate clamp (20,18) at the or each station and a key shape follower (36,34) at the or each station.

4. A key mill according to any one of claims 1 to 3 wherein at least one clamp has a key blank receiving groove (21) axially aligned with the said axial direction and a removable gate means (25) for defining an end of the groove.

5. A key mill according to any one of claims 1 to 4 wherein the indicator means for indicating the axial and transverse movement of the carriage comprises an index card receiving means (82), a first pointer (62) and a second pointer (58) coupled to the carriage arranged to indicate the axial and transverse movement in relation to an index card (64) on the receiving means (82).

6. A key mill according to any one of claims 1 to 5 wherein the further indicator means comprises a pointer (74) coupled to the milling head which is rotatably adjustable to move in the further direction.

7. A key mill according to claim 2 wherein a third clamp (19) is provided at a third station (17) at which a further milling tool (96) is provided, said further milling tool being rotatable about an axis parallel to the axial direction.

8. A key mill according to claim 7 wherein the third clamp includes a key holder (91) rotatable by means of an indexed wheel (92).

9. A key mill according to any one of claims 1 to 8 wherein the carriage or carriages are mounted on a shaft (8) having a handle (31) mounted thereto for manual movement of the carriage or carriages in the transverse direction.

10. A key mill according to any one of claims 1 to 9 wherein a depthing handle (48) is provided as the means to move the carriage or carriages in the transverse direction, the depthing handle being arranged to bear on the carriage or carriages and wherein means (59) are provided to disengage the action of the depthing handle on the carriage or carriages.

## Patentansprüche

1. Schlüsselfräsmaschine, umfassend einen Rahmen (2), einen ersten Wagen (14) einschließlich mindestens einer Klemme (20, 24) zum Klemmen von mindestens einem Schlüsselrohling (K1) an den Wagen, Mittel (50) zum Bewegen des Wagens relativ zum Rahmen in einer Axialrichtung (X), einen Fräskopf (30), der angeordnet ist, um ein Frägwerkzeug (28) zu tragen und das Werkzeug in eine weitere Richtung (Z) in einem im wesentlichen rechten Winkel zur Axialrichtung zu bewegen, Anzeigemittel (62), um die axiale Bewegung des Wagens anzuzeigen und weitere Anzeigemittel (74), um die Bewegung das Fräswerkzeuges in die weitere Richtung anzuzeigen, dadurch gekennzeichnet, daß der Fräskopf ohne Einstellung an dem Rahmen an einer ersten Station (16) befestigt ist, Mittel (48) bereitgestellt werden, um zumindest den ersten Wagen in einer Querrichtung (Y) quer zur Axialrichtung zu einem schlüsselkerbenbildenden Mittel (26) zu bewegen, das am Rahmen befestigt ist, Anzeigemittel (58) zum Anzeigen der Querbewegung des Wagens und dadurch, daß zumindest der erste Wagen schwenkbar um eine Achse auf einer Welle (8) in der Axialrichtung angebracht ist, um die Querbewegung bereitzustellen.

2. Schlüsselfräsmaschine nach Anspruch 1, wobei der Wagen eine erste Klemme (24) an der ersten Station und eine zweite Klemme (22) an einer zweiten Station (12) benachbart zur ersten Station aufweist.

3. Schlüsselfräsmaschine nach Anspruch 1 oder 2, wobei es eine Duplikatklemme (20, 18) an der oder jeder Station und einen Schlüsselformnachlauf (36, 34) an der oder jeder Station gibt.

4. Schlüsselfräsmaschine nach einem der Ansprüche 1 bis 3, wobei zumindest eine Klemme eine Rille (21) zur Aufnahme eines Schlusselrohlings, die axial mit der Axialrichtung ausgerichtet ist, und ein entfernbares Absperrmittel (25) zur Begrenzung eines Endes der Rille aufweist.

5. Schlüsselfräsmaschine nach einem der Ansprüche 1 bis 4, wobei das Anzeigemittel zum Anzeigen der Axial- und der Querbewegung des Wagens ein Mittel (82) zur Aufnahme von Indexkarten umfaßt, einen ersten Zeiger (62) und einen zweiten Zeiger (58), die an dem Wagen angebracht und angeordnet sind, um die Axial- und die Querbewegung in bezug auf eine Indexkarte (64) auf dem aufnehmenden Mittel (82) anzuzeigen.

6. Schlüsselfräsmaschine nach einem der Ansprüche 1 bis 5, wobei das weitere Anzeigemittel einen Zeiger (74) umfaßt, der mit dem Fräskopf verbunden ist, der drehbar eingestellt werden kann, um sich in die weitere Richtung zu bewegen.

7. Schlüsselfräsmaschine nach Anspruch 2, wobei eine dritte Klemme (19) an einer dritten Station (17) bereitgestellt wird, an der ein weiteres Fräswerkzeug (96) zur Verfügung gestellt wird, wobei das weitere Fräswerkzeug um eine Achse drehbar ist, die parallel zur Axialrichtung ist.

8. Schlüsselfräsmaschine nach Anspruch 7, wobei die dritte Klemme einen Schlüsselhalter (91) einschließt, der durch ein gerastetes Rad (92) drehbar ist.

9. Schlüsselfräsmaschine nach einem der Ansprüche 1 bis 8, wobei der Wagen oder die Wagen an einer Welle (8) befestigt sind, die einen Griff (31) aufweist, der daran zum Zwecke mechanischer Bewegung des Wagens oder der Wagen in der Querrichtung befestigt ist.

10. Schlüsselfräsmaschine nach einem der Ansprüche 1 bis 9, wobei ein Eingreifgriff (48) als das Mittel zur Bewegung des Wagens oder der Wagen in die Querrichtung bereitgestellt wird, wobei der Eingreifgriff so angeordnet ist, um sich auf dem Wagen oder den Wagen zu stützen und wobei Mittel (59) bereitgestellt werden, um die Wirkung des Eingreifgriffs auf den Wagen oder die Wagen zu lösen.

## Revendications

1. Machine à fabriquer des clés comprenant un bâti (2), un premier chariot (14) muni d'au moins une pince (20, 24) pour verrouiller au moins une ébauche de clé (K1) sur le chariot, des moyens (50) pour déplacer le chariot par rapport au bâti, dans une direction axiale (X), une tête de fraisage (30) disposée de manière à supporter un outil de fraisage (28) et à déplacer l'outil dans une autre direction (Z) sensiblement à angle droit par rapport à la direction axiale, des moyens indicateurs (62) pour indiquer le mouvement axial du chariot et d'autres moyens indicateurs (74) pour indiquer le mouvement de l'outil de fraisage dans l'autre direction, caractérisée en ce que la tête de fraisage (30) est fixée sans réglage sur le bâti en un premier emplacement (16), des moyens (48) sont prévus pour déplacer au moins le premier chariot dans une direction transversale (4), transversale à la direction axiale, vers des moyens de formation des crans de la clé (26) montés sur le bâti, des moyens indicateurs (58) pour indiquer le mouvement transversal du chariot et en ce que au moins le premier chariot est monté à pivotement autour d'un axe, sur un arbre (8) dans la direction axiale afin de réaliser le mouvement transversal.

2. Machine à fabriquer des clés selon la revendication 1, dans laquelle le chariot comporte une première pince (24) au premier emplacement et une seconde pince (22) en un second emplacement (12) adjacent au premier emplacement.

3. Machine à fabriquer des clés selon la revendication 1 ou 2, dans laquelle il existe une pince de rechange (20, 18) audit emplacement ou à chaque emplacement et un palpeur de la forme de la clé (36, 34) audit emplacement ou à chaque emplacement.

4. Machine à fabriquer des clés selon l'une quelconque des revendications 1 à 3 dans laquelle une pince comporte une rainure (21) de réception d'ébauche de clé, alignée axialement avec ladite direction axiale et un système de porte amovible (25) pour définir une extrémité de la rainure.

5. Machine à fabriquer des clés selon l'une quelconque des revendications 1 à 4 dans laquelle les moyens indicateurs pour indiquer les mouvements axiaux et transversaux du chariot comprennent des moyens de réception de carte d'index (82), une première aiguille (62) et une seconde aiguille (58) couplées au chariot, disposées de manière à indiquer les mouvements axiaux et transversaux en relation à une carte d'index (64) sur les moyens de réception (82).

6. Machine à fabriquer des clés selon l'une quelconque des revendications 1 à 5 dans laquelle les autres moyens indicateurs comprennent une aiguille (74), couplée à la tête de fraisage, qui est réglable de manière à se déplacer dans ladite autre direction.

7. Machine à fabriquer des clés selon la revendication 2 dans laquelle on prévoit une troisième pince (19) à un troisième emplacement (17) où est prévu un autre outil de fraisage (96) ledit autre outil de fraisage étant monté rotatif sur un axe parallèle à la direction axiale.

8. Machine à fabriquer des clés selon la revendication 7, dans laquelle la troisième pince comporte un support de clé (91) pouvant tourner à l'aide d'une roue indexée (92).

9. Machine à fabriquer des clés selon l'une quelconque des revendications 1 à 8 dans laquelle le chariot, ou les chariots, sont montés sur un arbre (8) muni d'une poignée (31) qui y est montée de manière à permettre un mouvement manuel du ou des chariots dans la direction transversale.

10. Machine à fabriquer des clés selon l'une quelconque des revendications 1 à 9 dans laquelle on prévoit une poignée d'avance de coupe (48) en tant que moyen pour déplacer le ou les chariots dans la direction transversale, la poignée d'avance de coupe étant disposée de manière à appuyer le ou les chariots et dans laquelle on prévoit des moyens (59) pour débrayer l'action de la poignée d'avance de coupe sur le ou les chariots
